# EUROPEAN PATENT APPLICATION

(11) **EP 4 086 493 A1**
(43) Date of publication of application: **09.11.2022**
(21) Application number: 22172205.1
(22) Date of filing: 07.05.2022
(51) Int. Cl.: F16K 31/18, F16K 31/26, A01K 7/04, F16K 33/00

(54) **A BALLCOCK VALVE AND COMPONENTS FOR A BALLCOCK VALVE**

(30) Priority: 07.05.2021 NZ 21775702
(71) Applicant: Springarm Products Ltd, 3873 Awamutu (NZ)
(72) Inventor: AWBURN, Marianne, 3873 Te Awamutu (NZ); AWBURN, Ric Edward Francis, 3873 Te Awamutu (NZ)
(74) Representative: Forresters IP LLP

(57) **Abstract**

A lever (1205) for a ballcock valve (1000) comprises an elongate arm (1210) which attaches to a float (1220) in use and a connector (1300) configured to connect the elongate arm (1210) to a valve mechanism of the ballcock valve (1000). The lever (1205) also comprises a resilient element (1400) configured to facilitate movement of the elongate arm (1210) relative to the connector (1300), to isolate or dampen impacts applied to the float (1220) or arm (1210) in use from the valve mechanism.

## Description

### Field of the invention

The present invention relates to a ballcock valve and components for ballcock valves.

### Background to the invention

A ballcock valve, also known as a ballcock, ball tap or float valve, is a mechanism used to control the water level in tanks or reservoirs. The ballcock valve comprises a valve which is connected to a float, usually via a lever or arm. The valve is mounted relative to a reservoir and connected to a water supply. The valve is opened and closed as float rises and lowers according to the level of water in the reservoir. Typically, the reservoir is filled up to a predetermined level, and when it reaches that level, the lever triggers the valve to close and stop the flow of water into the reservoir. When the water-level falls below the predetermined level, the float moves with it. This causes the valve to be opened by the lever as it is moved by the float.

Ballcock valves have a variety of uses including domestic and agricultural. For example, ballcock valves are commonly used in water troughs for livestock which provide a source of drinking water. The ballcock valve controls the flow of water into the water trough.

One problem with the existing ballcock valves used in water troughs is that the lever may be damaged or broken by livestock competing for access to water. This is particularly problematic during hot and dry periods. The livestock knock, pull or push the float connected to the lever and/or the lever itself. This may bend or even break the lever.

This damage or breakage may cause water to continue to flow through the valve and into the reservoir. This leads to water wastage, which is costly and unwanted. It may also lead to the water supply being drained and after some time the water source provided by the water trough will be exhausted. The livestock may be without water as a result.

Alternatively, the damage may stop or limit the flow of water into the reservoir. If a farmer or labourer is not made aware of this, the animals may go without water for a period of time. This is unhealthy for animals and may be detrimental to the farming operation.

In some situations, damage to ballcock valves can lead to the valve being left opened, and so water is wasted by overflowing the water trough.

Furthermore, replacement and repair of ballcock valves and components increases cost and is time consuming.

It is an object of aspects of the technology to provide a ballcock valve to overcome or ameliorate problems with existing ballcock valves.

Alternatively, it is an object to provide components for a ballcock valve to overcome or ameliorate problems with existing ballcock valve components.

Alternatively, it is an object to provide an improved ballcock valve.

Alternatively, it is an object to provide improved components for a ballcock valve.

Alternatively, it is an object to at least provide the public with a useful choice.

### Summary of the invention

According to one aspect of the invention there is provided a lever for a ballcock valve, wherein the lever comprises:
an elongate arm which attaches to a float in use, and
a connector configured to connect the elongate arm to a valve mechanism for the ballcock valve, and
a resilient element configured to facilitate movement of the elongate arm relative to the connector.

The resilient element is connected between the arm and the connector. The resilient element provides resiliency to facilitate the movement of the elongate arm relative to the connector to isolate or dampen impacts to the arm from the valve mechanism in use, yet provides sufficient rigidity so that the elongate arm, resilient element and the connector form the lever to operate (close and open) the ballcock valve.

In a preferred embodiment, the resilient element is configured to elastically bend by application of a buoyancy force applied by the float to the elongate arm when the valve mechanism is in a closed configuration. Preferably, the resilient element is configured to be elastically bent at an angle of between 5 to 30 degrees by application of the buoyancy force when the valve mechanism is closed. In other words, the flexible element is configured to elastically bend at an angle of 5 to 30 degrees while transmitting sufficient torque from the elongate arm to the connector to close the valve. The resilient element may be configured to transmit a torque from the elongate arm to the connector of 1Nm to 4Nm while elastically bending at an angle of 5 to 30 degrees.

Preferably, the resilient element is configured to allow the elongate arm to move relative to the connector by an angle of at least 80 degrees without permanent deformation, e.g. at an angle or 80 to 90 degrees without permanent deformation.

In a preferred embodiment the resilient element is a spring. In a most preferred embodiment, the spring is a coil spring. The coil spring may be a coil bound spring under no load. The coil spring may be formed by winding the spring at a pitch that is less than a wire diameter of the coil spring.

In some embodiments, the resilient element is configured to provide a non-linear spring rate, wherein the spring rate initially decreases after initial elastic bending of the resilient element.

Preferably, the connector is configured to, in use, releasably connect to the valve mechanism.

In some embodiments, the connector is configured to, in use, selectively connect to either of a first valve mechanism and a second valve mechanism, and wherein the first valve mechanism and the second flow mechanism are different to each other in at least one way.

In some embodiments, the resilient element is releasably connected to at least one of the elongate arm and the connector.

The connector is configured to connect the lever to the valve mechanism to pivot between a raised position and lowered position to close and open the valve.

According to another aspect of the invention there is provided a float mechanism for a ballcock valve, wherein the float mechanism comprises the lever as described in one or more of the above statements and a float which attaches to the elongate arm in use.

According to another aspect of the invention there is provided a ballcock valve, wherein the ballcock valve comprises a valve mechanism, the lever as described in one or more of the above statements, and a float which attaches to the elongate arm in use

In preferred forms, the valve mechanism controls flow into a reservoir.

In an example, the float may be releasably attached to the elongate arm. In another example, the float may be formed integrally to the elongate arm.

In an example, the connector may be configured to releasably connect the elongate arm to the valve mechanism.

The connector is configured to move relative to the valve mechanism to open or close the valve mechanism.

In an example, the connector may be configured to be inserted into the valve mechanism. In preferred forms, the valve mechanism may comprise an aperture configured to receive a portion of the connector.

In an example, the ballcock valve may comprise an attachment mechanism configured to facilitate attachment of the connector to the valve mechanism. In an example, the connector may be configured to engage with the attachment mechanism in use. In preferred forms, the attachment mechanism comprises a locking pin.

In an example, the connector may comprise an aperture configured to receive at least a portion of the locking pin.

In an example, the valve mechanism may comprise an aperture configured to receive a portion of the locking pin.

In an example, the valve mechanism's aperture and the connector's aperture may align when the connector is connected to the valve mechanism.

In an example, the locking pin may be disposed through the apertures to permit rotation of the connector about a longitudinal axis of the locking pin.

In an example, the resilient element may be releasably connected to at least one of the elongate arm and the connector. In another example, the spring may be formed integrally to at least one of the elongate arm and the connector.

Further aspects of the invention, which should be considered in all its novel aspects, will become apparent to those skilled in the art upon reading of the following description which provides at least one example of a practical application of the invention.

### Brief description of the drawings

The invention shall now be described by way of reference to the following non-limiting drawings, in which:
Figure 1 is a first side view of a first ballcock valve without a float according to an aspect of the present technology, showing the first ballcock valve in a first configuration;
Figure 2 is a first side view of the first ballcock valve of Figure 1, showing the first ballcock valve in a second configuration;
Figure 3 is a first side view of a second ballcock valve without a float according to another aspect of the present technology, showing the second ballcock valve in a first configuration;
Figure 4 is a first side view of the second ballcock valve of Figure 3, showing the second ballcock valve in a second configuration;
Figure 5 is a first side view of a third ballcock valve without a float according to another aspect of the present technology, showing the third ballcock valve in a first configuration;
Figure 6 is a first side view of the third ballcock valve of Figure 5, showing the third ballcock valve in a second configuration;
Figure 6A is an enlarged top view of the ballcock valve of Figure 1, showing a float mechanism connected to a valve mechanism.
Figure 7 is a first side view of a float mechanism for a ballcock valve according to another aspect of the present technology.
Figure 7A is a first side view of a float mechanism for a ballcock valve according to another aspect of the present technology.
Figure 8 is a first side view of a lever for a ballcock valve according to another aspect of the present technology.
Figure 9 is a second side view of the lever of Figure 8.
Figure 9A is a first side view of an elongate arm of the lever shown Figures 8 and 9.
Figure 10 is a first side view of a connector for a ballcock valve according to another aspect of the present technology.
Figure 11 is a side view of the lever of Figure 8 with a spring of the lever schematically shown elastically bent so that the elongate arm of the lever is oriented at an angle with the connector of the lever in a closed position associated with a closed position of the valve.

### Detailed description of the invention

### 1. Ballcock valve

Aspects of the present technology relate to a ballcock valve 1000.

The ballcock valve 1000 may be used, or configured for use with, a drinking reservoir or trough for livestock (not shown in the Figures). However, it is to be appreciated that the ballcock valve 1000 may be used with, or configured for use in, other applications which have not been illustrated or described herein.

In general, the ballcock valve 1000 comprises a valve mechanism 1100 and a float mechanism 1200 which is connected to the valve mechanism 1100.

### 1.1 Valve mechanism

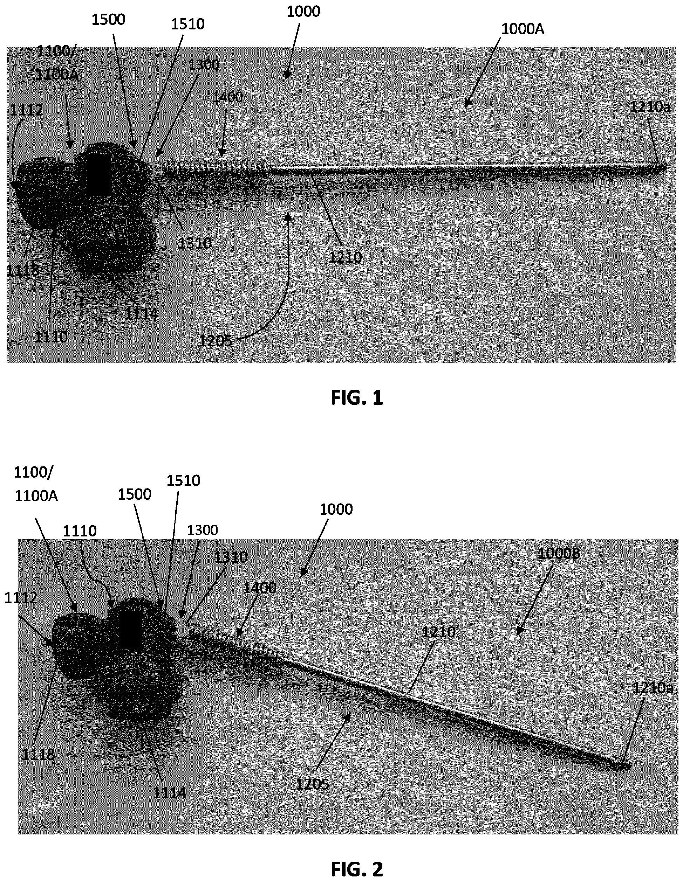

The valve mechanism 1100 controls the flow of water into the reservoir. The valve mechanism 1100 is configured to attach to a water supply (not shown in the Figures). As illustrated in Figures 1 to 6, the valve mechanism 1100 may comprise a body 1110. The body 1110 may comprise an inlet 1112, and outlet 1114 and a conduit portion (not illustrated in the Figures) which fluidly connects the inlet 1112 and outlet 1114. This allows for the flow of water through the body 1110. As illustrated in Figures 1 to 6, the body 1110 comprises a water supply connector 1118 which can connect, in use, to the water supply, e.g. via a pipe or tube, to the inlet 1112.The valve mechanism 1100 comprises a valve member (not illustrated in the Figures) configured to control the flow of water through the body 1110.

### 1.2 Float mechanism

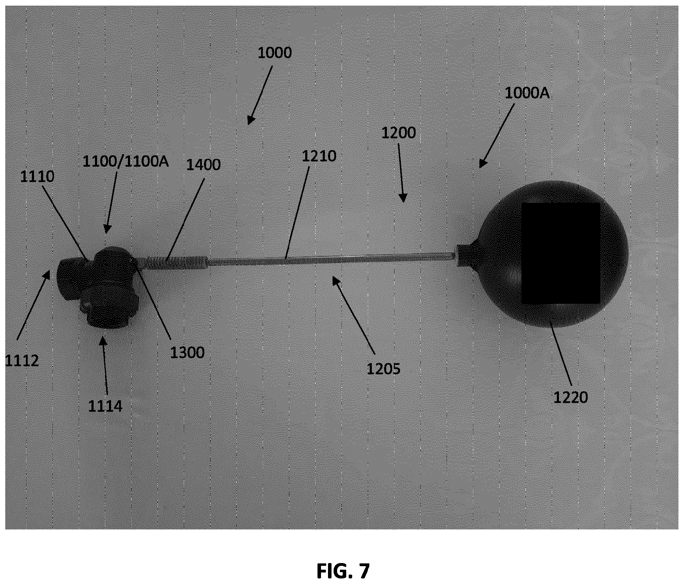

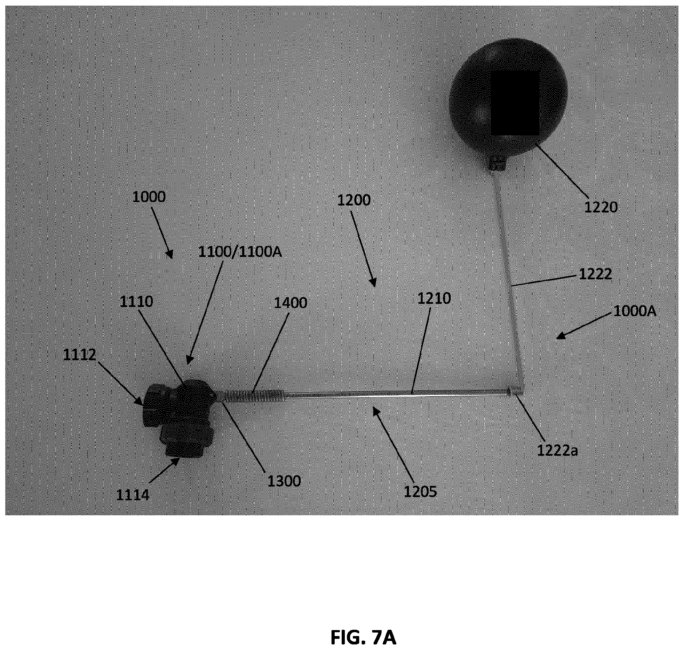

As illustrated in Figures 7 and 7A, the float mechanism 1200 comprises an elongate arm 1210 and a float 1220 which attaches to the elongate arm 1210 in use.

As shown in Figures 1 to 9, the float mechanism 1200 comprises a resilient element, e.g. spring 1400, configured to facilitate movement of the elongate arm 1210 relative to the valve mechanism 1100.

As illustrated in Figures 1 to 9, the float mechanism 1200 comprises a connector 1300 configured to connect the elongate arm 1210 to the valve mechanism 1100.

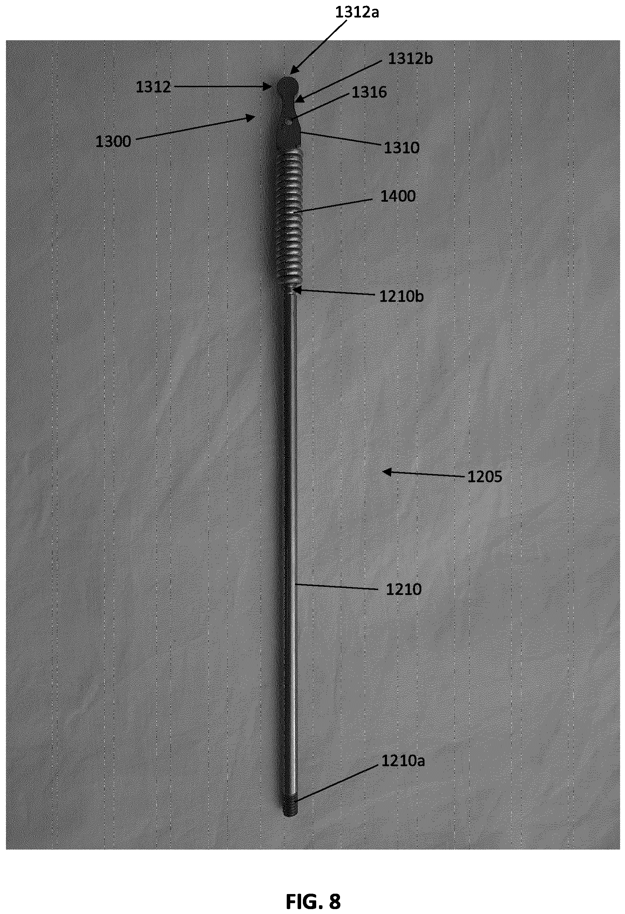

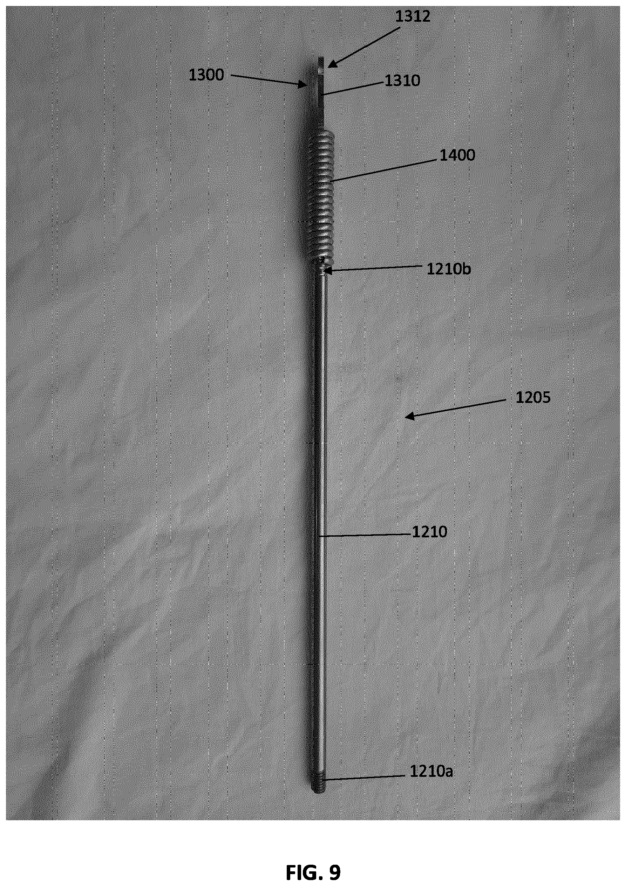

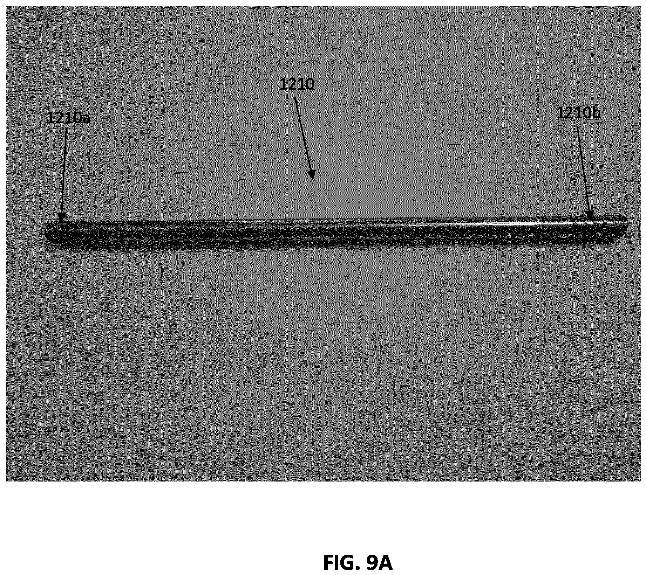

As is best shown in Figures 8 and 9, the elongate arm 1210, resilient element, e.g. spring 1400 and the connector 1300 form a lever 1205 for the ballcock valve 1000. The lever 1205 connects the float 1220 to the valve mechanism 1100.

In preferred forms, the elongate arm 1210 comprises a metal rod as is best shown in Figure 9A. However, the elongate arm 1210 may be any other suitable shape or size, or formed with any suitable component(s). For example, the float mechanism 1200 may comprise an arm, e.g. a shortened arm, and a resilient element, e.g. spring, which is elongated relative to the arm.

The float 1220 provides buoyancy to the float mechanism 1200. In preferred forms, as illustrated in Figures 7 and 7A, the float 1220 may be attached to the elongate arm 1210. For example, the float 1220 may be releasably attached to the elongate arm 1210. As is best shown in Figures 8 and 9, and Figure 9A a distal end region of the elongate arm 1210 may comprise a threaded region 1210a to screw into attachment with a respective threaded portion (not illustrated in Figures 8 and 9) on the float (not shown in Figures 8 and 9). In some forms, as shown in Figure 7, the float 1220 may attach directly to the elongate arm 1220, e.g. the float 1220 may have a threaded aperture to engage with the threaded region 1210a. In another form illustrated in Figure 7A, the float 1220 may attach indirectly to the elongate arm 1210, e.g. it may be attached to the elongate arm 1220 via a flexible member such as a cord 1222. However, the flexible member may be in the form of a cable, rope, line or other suitable component. In these forms, the flexible member, e.g. cord 1222 may comprise provide a component 1222a which engages with the elongate arm 1210, e.g. the component 1222a may be threaded to screw into attachment with threaded region 1210a. However, other attachment mechanisms (not illustrated in the Figures) may be used to releasably attach the float 1220 to the elongate arm 1210.

In other forms, not illustrated in the Figures, the float 1220 may be permanently attached to the elongate arm 1210, e.g. using adhesives or welding a metal portion of a float to a proximal end of the metal rod. In yet other forms which are not illustrated, the float 1220 may be integrally formed with the elongate arm 1210.

### 1.2.1 Resilient element

As is best illustrated in Figures 8 and 9, the resilient element is in the form of a spring 1400, e.g. a coil spring. However, in other forms not shown in the Figures, the resilient element may comprise a leaf spring, a joint formed from a resilient material such as rubber, and/or other component(s) which act resiliently and allow one part of the float mechanism 1200 / lever 1205 to be moved relative to another part of it and cause it to return to its original state.

The resilient element may be configured to move, flex or bend when a sufficient force is applied to it, e.g. one generated by cattle when drinking from the reservoir. The resilient element is configured to return to its original state or form when this force is removed. The resilient element is configured to deform/deflect elastically. The resilient element allows the arm 1210 to move relative to the connector 1300 in the event of an impact to the arm. Thus, the resilient member isolates or dampens impacts to the arm 1210 from the valve 100. This may help limit or prevent damage to or breakage of the ballcock valve 1000 or parts thereof. For example, without the resilient element, the elongate arm 1210 may be bent, or the valve mechanism 1100 damaged by the bending. Thus, the resilient element may reduce costly and time consuming repairs or replacements. It may also help prevent water wastage occurring because the water continues to flow until the water supply is drained. Alternatively, the damage may disrupt the water flow, leading to a lack of drinking water for the livestock.

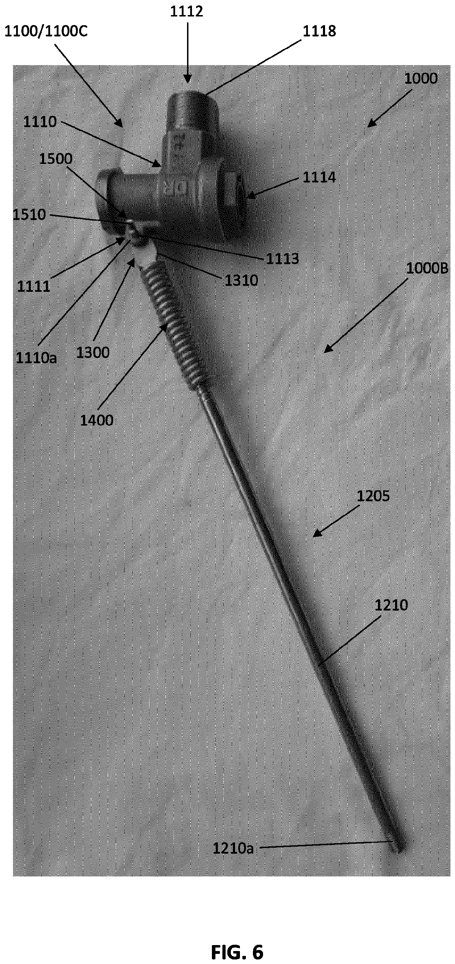

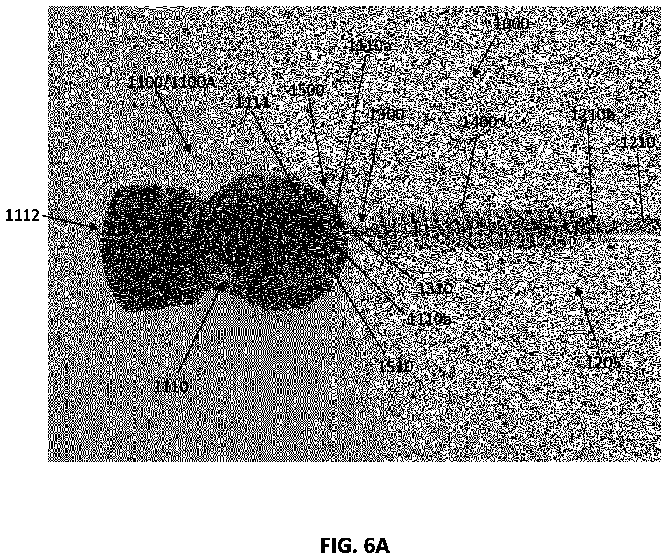

The resilient element, e.g. spring 1400, may be releasably connected to the elongate arm 1210. For example, as is best shown in Figures 6A, and 9A, a proximal end of the elongate arm 1210 may comprise a threaded region 1210b to screw into attachment with a corresponding internal surface of the spring 1400. The spring may be wound or rotated/twisted onto the arm to connect the arm and spring. However, other attachment mechanisms (not illustrated in the Figures) may be used to releasably attach the resilient element to the elongate arm 1210.

In other forms, the resilient element may be permanently attached to the elongate arm 1210, e.g. using adhesives or welding a portion of a metal spring to a proximal end of the metal rod, or press fitting a portion of the arm into the spring. In yet other forms, the resilient element may be integrally formed with the elongate arm 1210. For example, in these other forms, the elongate arm may be configured to act as the resilient element, e.g. the spring may form the arm.

The resilient member is configured to provide sufficient resiliency to allow the arm to deflect or move relative to the connector to isolate or dampen impacts to the arm from the valve mechanism yet is stiff enough/provides sufficient rigidity so that the elongate arm 1210, resilient element 1400 and the connector 1300 form the lever 1205 to operate (close and open) the ballcock valve 1000.

Preferably the resilient element provides a maximum amount of resiliency while still also having sufficient stiffness/rigidity to operate the valve. In a preferred embodiment, the resilient member provides sufficient resiliency to elastically bend under normal operation, that is the resilient member elastically bends under the buoyancy force applied to the arm by the float while also being stiff enough/sufficiently rigid to transfer sufficient torque from the float and arm to the connector to close the valve. The resilient element is configured to elastically bend by application of the buoyancy force to the arm when the valve mechanism is in the closed configuration to stop a flow of water into the reservoir. If the resilient element was undeflected when the valve is in the closed configuration under action of the buoyancy force, the resilient element would not be configured to provide a maximum amount of resiliency to isolate or dampen impacts.

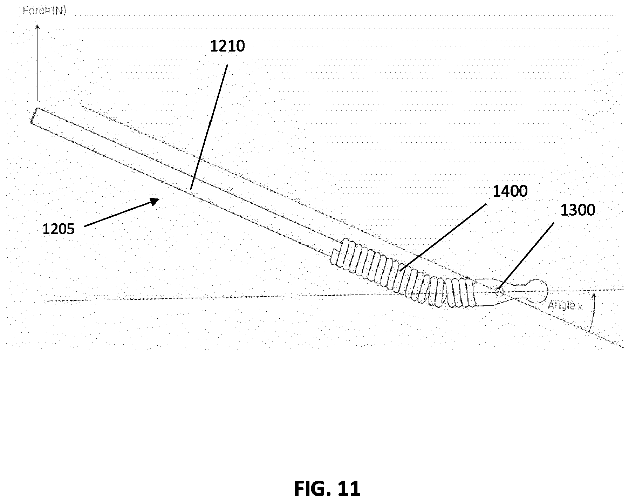

Thus, the resilient element is elastically bent while providing sufficient torque to the connector to close the valve. With reference to Figure 11, the resilient element may be sufficiently resilient so that the buoyancy force (force N in Figure 11) applied to the arm by the float when the valve is closed causes the arm to move relative to the connector by an angle x of between 5 to 30 degrees, or 10 to 25 degrees, or 10 to 20 degrees or about 15 degrees. The angle x may be the angle between a longitudinal axis of the resilient element at the connector and a longitudinal axis of the resilient element at the arm, i.e. the angle between an orientation of the arm without bending of the resilient element and an orientation of the arm with bending of the resilient element. The movement of the elongate arm relative to the connector provided by the resilient element is in addition to an amount of movement of the lever 1205 relative to the valve mechanism to open and close the valve.

Should the resilient element bend by a much larger angle under the action of the buoyancy force, the resilient element may be too resilient/soft for the elongate arm to function adequately as a lever. For example, if the resilient element was so resilient as to bend to an angle where the arm was oriented vertically, the elongate arm would not contribute a torque to the connector.

As the buoyancy force increases to close the valve mechanism, the force applied by the float to the arm to close the valve also causes the resilient element to elastically bend. The resilient element bends while at the same time transfers torque to the connector to close the valve. The resilient element remains elastically deflected when the valve is closed. The resilient element returns to its undeflected state as the valve opens and/or when the valve is open as the buoyancy force applied by the float to the arm decreases or is removed.

The resilient element preferably provides sufficient resiliency so that the arm can deflect relative to the connector by up to 80 degrees or 90 degrees without permanent deformation of the spring. This enables the float to be knocked by animals without damage to the arm or valve mechanism, at least in most cases.

In the illustrated embodiment the resilient member is a coil spring. The spring is wound so that the coils of the spring are stacked tight, that is the spring is wound so that the spring is a coil bound spring under no load. A coil bound spring provides a non-linear spring rate, whereby the spring rate is initially stiffer (higher spring rate) until the string undergoes elastic bending. Once the spring has undergone elastic bending and coils of the spring separate, the spring may be less stiff (lower spring rate). A non-linear spring rate may assist with transferring sufficient torque to the connector to operate the valve while providing resiliency to isolate or dampen the connector and therefore valve from impacts to the arm. Other methods of providing a variable or non-linear spring rate may be possible.

In some embodiments the spring may be wound to provide an interference contact between adjacent coils of the spring. For example, the spring may be wound at a pitch that is less than a wire diameter of the spring. This may increase the non-linear characteristic of the spring, whereby the spring is sufficiently stiff to operate as a lever under action of the force provided by the float but sufficiently resilient to isolate or dampen impacts applied to the arm from the connector and valve.

The length of the illustrated coil spring is approximately 70mm. However, in the illustrated embodiment, a portion of the connector is received in one end of the spring and a portion of the arm is received in the other end of the spring, to connector the connector, spring and arm together. A free length of the spring between an end of the connector received in the spring and an end of the arm received in the spring is approximately 35 to 45mm, or around 40mm.

The illustrated spring has a wire diameter of approximately 3.2mm, an internal diameter of approximately 7.6mm and an outside diameter of approximately 14mm. The spring may be wound at a pitch of 2.8mm to have an interference contact between coils as described above. The spring may be formed from stainless steel, e.g. grade SUS304. The wire diameter is less than the diameter of the elongate arm. For example, the wire diameter is less than half the diameter of the elongate arm, or less than one third of the diameter of the elongate arm.

The torque required to be applied by the lever to the valve mechanism to close the ballcock valve may be approximately 1 to 4 Nm, or about 2 to 3Nm, or about 2Nm. The table below indicates an angle x of deflection of the arm provided by the above example resilient element. The example embodiment provides an angle of deflection of about 10 degrees per Nm of transmitted torque up to an deflection of about 80degrees.

| Torque required to bend resilient element (Nm) | Angle (degrees) |
|---|---|
| 1.5 | 10 |
| 2.0 | 15 |
| 2.5 | 20 |
| 3.3 | 30 |
| 4.3 | 40 |
| 5.2 | 50 |
| 6.2 | 60 |
| 7.0 | 70 |
| 7.9 | 80 |
| 8.2 | 90 |

Other resilient element configurations are possible to achieve the preferred spring characteristics described above, to have sufficient resiliency to isolate or dampen impacts to the arm from the valve mechanism while providing sufficient rigidity to configure the float mechanism to operate as a lever to operate the valve.

### 1.2.2 Connector

As shown in Figures 1 to 6A, the connector 1300 is adapted to connect the elongate arm 1210 to the valve mechanism 1100.

In preferred forms, the connector 1300 releasably connects the elongate arm 1210 to the valve mechanism 1100. In preferred forms, as best shown in Figures 1 to 6A, the connector 1300 may be configured to be inserted into the valve mechanism 1100. As is best shown in Figure 6A, the body 1110 comprises an aperture 1111 configured to receive a portion of the connector 1300.

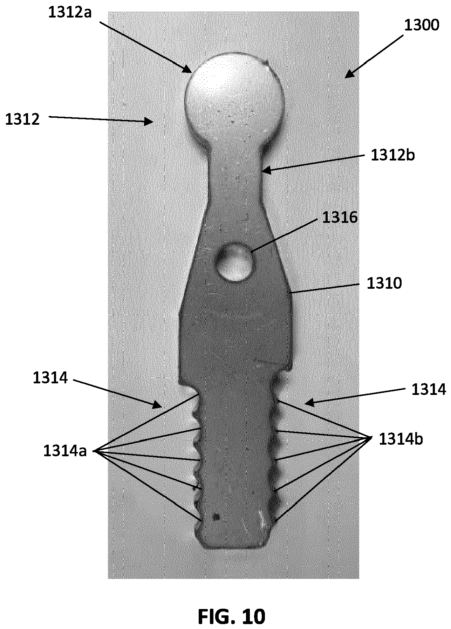

For example, as is best illustrated in Figure 10, the connector 1300 may comprise a body 1310. The body 1310 may be shaped and structured to be inserted into the aperture 1111. For example, as is best shown in Figure 10, the body 1310 may comprise a head portion 1312 which may be inserted, in use, into the aperture 1111. The head portion 1312 may be substantially elongate and substantially narrow to facilitate insertion into the aperture 1111. The head portion 1312 may have an at least partially rounded region 1312a as illustrated in Figure 8 and 10. The head portion 1312 may have a narrow region 1312b, as is illustrated best in Figure 10. The narrow region 1312a is narrow relative to the rounded region 1312a. This may facilitate movement, e.g. rotation, of the head portion 1312 within the aperture 1111, which may facilitate movement of the valve member as discussed in more detail below. However, in other forms not shown in the Figures, the head portion 1312 may comprise any other suitable shape or configuration.

In some embodiments, the resilient element, e.g. spring 1400, is releasably connected to the connector 1300. For example, as is best shown in Figure 10, a distal end region of the body 1310 may comprise an edge comprising a plurality of recesses 1314, wherein the recesses 1314 may be configured to engage with an internal surface of the coil spring 1400. The recesses 1314 form troughs 1314a and ridges 1314b on the edge as shown in Figure 10 to correspond with coils of the spring. The spring may be wound or rotated/twisted onto the connector to connect the spring and connector. However, it is to be appreciated that other attachment mechanisms (not illustrated in the Figures) may be used to releasably attach the resilient element to the connector 1300.

In other forms, the resilient element may be permanently attached to the connector 1300, e.g. using adhesives or welding a metal spring 1400 to the distal end region of the connector's body 1310, or press fitting a portion of the connector into the spring. In yet other forms not illustrated in the Figures, the connector 1300 may be integrally formed with the resilient element.

### 1.2.3 Attachment mechanism

As illustrated in Figures 1 to 6A, the ballcock valve 1000 may comprise an attachment mechanism 1500 configured to facilitate connection of the float mechanism 1200 to the valve mechanism 1100. The attachment mechanism 1500 may form part of the float mechanism 1200.

In preferred forms, as illustrated in Figures 1 to 6A, the attachment mechanism 1500 may comprise a locking pin 1510.

The connector 1300 may be configured to engage with the attachment mechanism 1500. For example, as is best shown in Figure 10, the body 1310 may comprise an aperture 1316 configured to receive at least a portion of the locking pin 1510. The aperture 1316 may be positioned substantially centrally on the connector 1300 as shown in Figure 10.

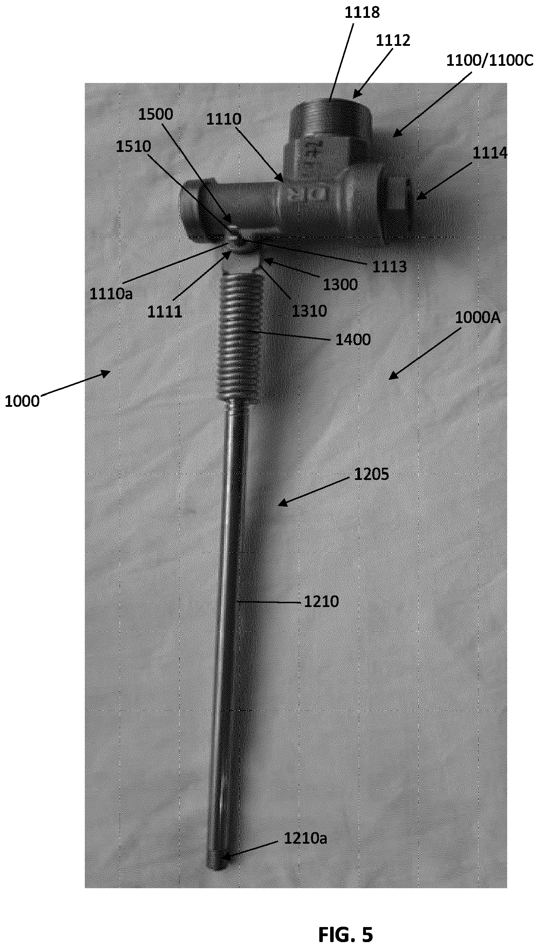

In preferred forms, the valve mechanism 1100 may comprise a pair of apertures 1113 configured to each receive a portion of the locking pin 1510 as shown in Figures 1 to 6. As is illustrated best in Figures 5, 6 and 6A, the body 1110 may comprise a pair of projecting members 1110a on which the apertures 1113 may be provided. The projecting members 1110a extend from the body 1110 on either side of aperture 1111. Preferably, the pair of apertures 1113 and the aperture 1316 may align when the connector 1300 is connected to the valve mechanism 1100, e.g. when the head portion 1312 is inserted into aperture 1111 and is positioned between the projecting members 1110a.

As shown in Figures 1 to 6A, the locking pin 1510 is disposed through the apertures 1113 and the aperture 1316. The connector 1300 may rotate about a longitudinal axis of the locking pin 1510. This may facilitate opening and closing of the ballcock valve 1000, as will be described in more detail below.

### 1.2.4 Selective connection of float mechanism to valve mechanism

As illustrated in Figures 1 to 6, the float mechanism 1200 may be configured to selectively connect to any one of a plurality of valve mechanisms 1100A, 1100B, 1100C.

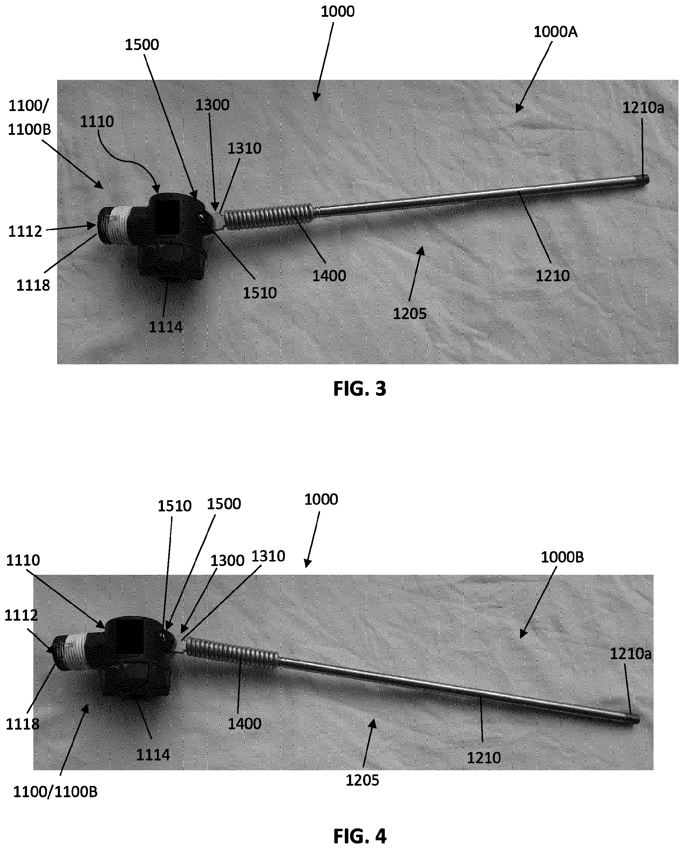

For example, Figures 1 and 2 show a first valve mechanism 1100A, wherein the float mechanism 1200 is connected to the first valve mechanism 1100A. Figures 3 and 4 show a second valve mechanism 1100B, wherein the float mechanism 1200 is connected to the second valve mechanism 1100B. Figures 5 and 6 show a third valve mechanism 1100C, wherein the float mechanism 1200 is connected to the third valve mechanism 1100C.

Each of the plurality of valve mechanisms 1100A, 1100B, 1100C are different to each other in at least one way. However, it is to be appreciated that while each of the various valve mechanisms 1100A, 1100B and 1100C may differ in one or more ways, they may comprise one or more of the same or similar components which may facilitate connection of the float mechanism 1200 to the valve mechanism 1100. For example, each of the various valve mechanisms 1100A, 1100B and 1100C may permit connection to the connector 1300 described above. They may each comprise a similar aperture 1111 and a similar pair of apertures 1113 so that the connector 1300 can connect to each of valve mechanisms 1100A, 1100B and 1100C in the same way and operate a respective valve member.

Therefore, the float mechanism 1200 may be operable with each of the first valve mechanism 1100A, the second valve mechanism 1100B and the third valve mechanism 1100C. The float mechanism 1200 may be retrofit to commercially available valve mechanisms. In some forms, the lever 1205 may be retrofit to commercially available valve mechanisms and/or floats. For example, the releasable attachment of the float 1220 to the elongate arm 1210 may facilitate the connection of one of a plurality of floats to the elongate arm 1210. The threaded region 1210a may permit the elongate arm 1210 to be retrofit to commercially available floats.

Therefore, the float mechanism 1200 may be used on various valve mechanisms. For example, if only the float mechanism 1200 or a part of it is damaged or broken, it can be replaced without replacing the entire valve mechanism. This applies to a damaged or broken valve mechanism 1100. It can be replaced without replacing the entire float mechanism 1200 or parts of it. This allows for cheaper repair or replacement of components of the ballcock valve 1000. Furthermore, the releasable attachment between one or more of the components of float mechanism 1200 (e.g. the arm 1210, the float 1220, the spring 1400 and/or the connector 1300) may allow for cheaper and simpler repair or replacement of components of the float mechanism 1200.

### 1.3 Operation of the ballcock valve and components

The float mechanism 1200 is configured to move relative to the valve mechanism 1100 so that the ballcock valve 1000 can be closed and opened.

As illustrated in Figures 1 to 6, the ballcock valve 1000 is configured to move between a first position and a second position. Figures 1, 3, and 5 show the ballcock valve 1000 in a closed or first configuration 1000A in which the flow of water through the valve mechanism 1100 is substantially limited or prevented, i.e. it is closed. Figures 2, 4 and 6 show the ballcock valve 1000 in an open or second configuration 1000B in which the flow of water through the valve mechanism 1100 is permitted, i.e. it is opened.

The valve member (not illustrated in the Figures) is configured to move between a first position and a second position. In the first position, the valve member may limit or prevent the flow of water through the valve mechanism 1100. Therefore, the valve member is in the first position when the ballcock valve 1000 is in the first configuration 1000A. In the second position, the valve member may permit the flow of water through the valve mechanism 1100. Therefore, the valve member is in the second position when the ballcock valve 1000 is in the second configuration 1000B.

The movement of the float mechanism 1200 is associated with the change in water level in the reservoir. For example, as the reservoir is filled, once the buoyancy forces acting on the float mechanism 1200 exceed the gravitational forces and any other forces acting on the float mechanism 1200, the float mechanism 1200 moves and applies a force on the valve member which moves it from the second position to the first position to stop the flow of water. The float mechanism moves to a raised position as shown in Figures 1, 3 and 5 to close the valve mechanism. The float mechanism moves to or towards a lowered position as shown in Figures 2, 4 and 6 to open the valve. The float mechanism moves to the raised position as a water level increases to close the valve, and moves from the raised position to or towards the lowered position as the water level decreases to open the valve. As noted above, the amount of movement of the elongate arm relative to the connector/valve mechanism provided by the resilient element 1400 is in addition to an amount of movement of the lever 1205 comprising the elongate arm, resilient member and connector relative to the valve mechanism to open and close the valve. For example, the lever may pivot about the axis of the locking pin by approximately 20 to 30 degrees between a full open position and a closed position by. By example, if the connector pivots through an angle of 25 degrees between the full open and closed positions, and the resilient element 1400 is configured to bend by 15 degrees to transmit sufficient torque to close the valve, the elongate arm will move through an angle of 40 degrees between the full open position without a buoyance force applied to the arm and the closed position under the buoyancy force applied to the arm.

The ballcock valve 1000 may comprise an axle around which the float mechanism 1200 can rotate. The axle permits movement of the float mechanism 1200 relative to the valve mechanism 1100 in a substantially vertical direction in use. In preferred forms, the locking pin 1510 acts as the axle. The float mechanism pivots about an axis of the pin 1510 to move the valve mechanism between the raised and lowered positions to close and open the valve.

As shown in Figures 1 to 6, the connector 1300 can move relative to the valve mechanism 1100. In preferred forms, the connector 1300 may be rotatably connected to the axle, e.g. locking pin 1510, as shown in Figures 1 to 6.

In preferred forms, the connector 1300 may be configured to move the valve member. The head portion 1312 is adapted to bear down against a surface of the valve member as the float mechanism 1200 is moved upwards as the water level rises. The valve member moves into the first position as the valve mechanism 1000 moves into the first configuration 1000A. In contrast, when the water level is lowered beyond a certain point, gravity will move the float mechanism 1200 downwards which moves the head portion 1312 upwards and away from the surface of the valve member. This allows the valve member to freely move from the first position to the second position. For example, the water pressure from the water supply moves the valve member from the first position to the second position.

### 1.4 Dimensions of the float mechanism and components

In preferred forms, the dimensions of the float mechanism 1200 and the dimensions of components thereof, e.g. the elongate arm 1210, spring 1400, and/or connector 1300, may be configured to permit operation with a plurality of valve mechanisms, as described above.

In some forms, the length of the elongate arm 1210, e.g. the metal rod, may be between 50 mm and 400 mm, for example 200 mm. The length of the threaded region 1210a may between 8 mm and 15 mm, for example 10 mm. The length of the threaded region 1210b may between 10 mm and 45 mm, for example 20 mm. The thickness, e.g. diameter, of the elongate arm 1210, e.g. the metal rod, may be between 6 mm and 15 mm, for example 8 mm. The arm may be formed from metal, for example stainless steel or brass.

In some forms, the length of the connector 1300 may be between 34 mm and 80 mm, preferably 54 mm. The thickness or depth of the connector 1300 may be between 2 mm and 5 mm, preferably 3 mm. The widest portion of the connector 1300 may have a width of between 6 mm and 20 mm, preferably 13 mm. The narrowest portion of the connector 1300 may have a width of between 3 mm and 6.5 mm, preferably 6.3 mm. The narrowest portion may be at the narrow region 1312b. The length of the narrow region 1312b may be between 7 mm and 8 mm, preferably 7.5 mm. The widest portion may taper towards the narrow region 1312b. The rounded region 1312a extends from the narrow region 1312b, as shown in Fig. 10. The rounded region 1312a is wider than the narrow region 1312b. The dimensions, e.g. diameter, of the rounded region 1312a may be between 5 mm and 12 mm, preferably 11.5 mm. The dimensions, e.g. diameter, of the aperture 1316 may be between 3 mm and 28 mm, preferably 4 mm. The portion of the connector 1300 which comprises the recesses 1314 may be narrower than the adjacent portion thereof which may form the widest portion, e.g. the dimensions between the opposing ridges 1314b may be between 5.5 mm and 30 mm, preferably 9.46 mm. The depth of the recesses may be between 1 mm and 4 mm, preferably 1.46 mm. The length of each recess 1314, e.g. the distance between adjacent ridges 1314b may be between 1 mm and 5 mm, preferably 3.4 mm.

Unless the context clearly requires otherwise, throughout the description and the claims, the words "include", "including", and the like, are to be construed in an inclusive sense as opposed to an exclusive or exhaustive sense, that is to say, in the sense of "including, but not limited to".

Reference to any prior art in this specification is not, and should not be taken as, an acknowledgement or any form of suggestion that that prior art forms part of the common general knowledge in the field of endeavour in any country in the world.

Aspects of the present technology may also be said broadly to consist in the parts, elements and features referred to or indicated in the specification of the application, individually or collectively, in any or all combinations of two or more of said parts, elements or features. Where in the foregoing description reference has been made to integers or components having known equivalents thereof, those integers are herein incorporated as if individually set forth.

It should be noted that various changes and modifications to the presently preferred embodiments described herein will be apparent to those skilled in the art. Such changes and modifications may be made without departing from the spirit and scope of the invention and without diminishing its attendant advantages. It is therefore intended that such changes and modifications be included within the present technology.

## Claims

1. A lever for a ballcock valve, wherein the lever comprises:
an elongate arm which attaches to a float in use,
a connector configured to connect the elongate arm to a valve mechanism of the ballcock valve, and
a resilient element configured to facilitate movement of the elongate arm relative to the connector.

2. The lever as claimed in claim 1, wherein the resilient element is configured to elastically bend by application of a buoyancy force applied by the float to the elongate arm when the valve mechanism is in a closed configuration.

3. The lever as claimed in claim 2, wherein the resilient element is configured to be elastically bent at an angle of between 5 to 30 degrees by application of the buoyancy force when the valve mechanism is closed.

4. The lever as claimed in any one of claims 1 to 3, wherein the resilient element is configured to allow the elongate arm to move relative to the connector by an angle of at least 80 degrees without permanent deformation.

5. The lever of any one of claims 1 to 4, wherein the resilient element is a spring.

6. The lever of claim 5, wherein the spring is a coil spring.

7. The lever as claimed in claim 6, wherein the coil spring is a coil bound spring under no load.

8. The lever as claimed in claim 7, wherein the coil spring is formed by winding the spring at a pitch that is less than a wire diameter of the coil spring.

9. The lever as claimed in any one of claims 1 to 8, wherein the resilient element is configured to provide a non-linear spring rate, wherein the spring rate initially decreases after initial elastic bending of the resilient element.

10. The lever of any one of claims 1 to 9, wherein the connector is configured to, in use, releasably connect to the valve mechanism.

11. The lever of any one of claims 1 to 10, wherein the connector is configured to, in use, selectively connect to either of a first valve mechanism and a second valve mechanism, and wherein the first valve mechanism and the second flow mechanism are different to each other in at least one way.

12. The lever of any one of claims 1 to 11, wherein the resilient element is releasably connected to at least one of the elongate arm and the connector.

13. The lever of any one of claims 1 to 12, wherein the connector is configured to connect the lever to the valve mechanism to pivot between a raised position and lowered position to close and open the valve.

14. A float mechanism for a ballcock valve, wherein the float mechanism comprises the lever as claimed in any one of claims 1 to 13 and a float which attaches to the elongate arm in use.

15. A ballcock valve, wherein the ballcock valve comprises a valve mechanism, the lever as claimed in any one of claims 1 to 13, and a float which attaches to the elongate arm in use.
